# EUROPÄISCHE PATENTANMELDUNG

(11) **EP 2 759 463 A1**
(43) Veröffentlichungstag der Anmeldung: **30.07.2014**
(21) Anmeldenummer: 14153987.4
(22) Anmeldetag: 17.03.2011
(51) Int. Cl.: B62M 3/08

(54) **Fahrradpedal**

(30) Priorität: 18.03.2010 DE 202010003825 U
(62) Teilanmeldung aus: 11158673.1
(71) Anmelder: RTI Sports Vertrieb von Sportartikeln GmbH, 56070 Koblenz (DE)
(72) Erfinder: Tofaute, Kim, 56112 Lahnstein (DE)
(74) Vertreter: Von Kreisler Selting Werner - Partnerschaft von Patentanwälten und Rechtsanwälten mbB

(57) **Zusammenfassung**

Ein Fahrradpedal weist einen Pedalkörper (10) auf, Der Pedalkörper (10) bildet zwei einander gegenüberliegende Aufstandflächen (12) aus. Der Pedalkörper (10) ist mittels einer Pedalachse (18) drehbar gehalten. Zur Fixierung von innerhalb des Pedalkörpers (10) angeordneten Lagern ist ein die Pedalachse (18) umgebendes Fixierelement (20) vorgesehen. Erfindungsgemäß ist von der Innenseite des Pedalkörpers (10) ein Führungselement (22) zum seitlichen Führen eines auf der Aufstandfläche (12) aufstehenden Fußes angeordnet. Um den Fuß möglichlist nahe an eine Tretkurbel führen zu können, dabei jedoch sicher zu stellen, dass der Fuß nicht mit der Tretkurbel kollidiert, ist das Führungselement derart ausgebildet, dass es das Fixierelement (20) in Draufsicht zumindest teilweise überdeckt.

## Beschreibung

Die Erfindung betrifft ein Fahrradpedal.

Um eine gute und gleichmäßige Kraftübertragung auf das Fahrradpedal zu gewährleisten, muss die Lage des Fußes relativ zum Pedal, insbesondere zur Pedalachse, definiert sein. Dies wird bei bekannten Fahrradpedalen, die insbesondere bei Sporträdern verwendet werden durch so genannte Klick-Pedale, realisiert. Hierbei ist an der Schuhsohle ein Rastelement vorgesehen, das mit einem am Pedalkörper vorgesehen Rastelement zusammenwirkt. Das Pedalsystem weist den Nachteil auf, dass spezielle Schuhe verwendet werden müssen. Aufgrund des vorstehenden Rastelements an der Schuhsohle sind diese Schuhe ferner zum Gehen ungeeignet. Ein weiterer Nachteil von Klick-Pedalen besteht darin, dass besonders für den ungeübten Benutzer die Gefahr besteht, den Fuß nicht rechtzeitig aus dem Pedal lösen zu können. Dies kann beispielsweise beim Anhalten oder in Gefahrensituationen zu Stürzen führen. Klick-Pedale haben sich daher nur im Sportbereich durchgesetzt. Insbesondere für Stadträder, Trekkingräder oder dergleichen sind Klick-Pedale ungeeignet.

Herkömmliche Pedale, wie beispielsweise in US 617,707 oder DE 2 100 825 beschrieben, weisen den Nachteil auf, dass die Stellung des Fußes auf dem Pedal nicht definiert ist. Dies führt dazu, dass die Kraftübertragung beeinträchtigt ist. Insbesondere können durch derartige Fehlstellungen erhebliche Belastungen der Gelenke auftreten. Ferner wird der Fuß häufig relativ weit außen am Pedal aufgesetzt, da die Befürchtung besteht, beim Treten mit der Tretkurbel zu kollidieren. Zur Verbesserung der Gelenkbelastung, insbesondere der Belastung des Kniegelenks, wäre es jedoch vorteilhaft, den Fuß weiter innen nahe der Tretkurbel anzuordnen.

Ferner wird der Fuß in Pedallängsrichtung, d.h. in Fahrtrichtung häufig zu weit nach vorne gesetzt. Dies führt dann dazu, dass die Kraftübertragung nicht im Bereich des Fußballens bzw. des Großzehengelenks erfolgt, obwohl hier die effektivste Kraftübertragung gegeben wäre.

Aufgabe der Erfindung ist es, ein Fahrradpedal zu schaffen, bei dem die Lage des Fußes relativ zu dem Pedal auch bei einer nicht festen Verbindung zwischen Schuh und Pedal verbessert ist.

Die Lösung der Aufgabe erfolgt erfindungsgemäß durch die Merkmale des Anspruchs 1.

Das erfindungsgemäße Fahrradpedal ist derart ausgebildet, dass keine feste Verbindung zwischen einer Schuhsohle und dem Pedal erfolgt. Insbesondere sind keine Rastelemente oder dergleichen wie bei Klick-Pedalen vorgesehen. Das Fahrradpedal weist einen vorzugsweise aus Kunststoff hergestellten Pedalkörper auf. Der Pedalkörper bildet eine Aufstandfläche für den Schuh. Üblicherweise weist der Pedalkörper zwei einander gegenüber liegende Aufstandflächen auf, so dass der Fuß unabhängig von der Stellung des Pedals aufgesetzt werden kann. Der Pedalkörper ist durch eine Pedalachse drehbar gehalten. Die Pedalachse trägt ein Lagerelement, wobei es sich üblicherweise um zwei Wälzlager handelt. Der freie Ansatz der Pedalachse weist üblicherweise ein Gewinde auf, so dass die Pedalachse in eine Gewindebohrung der Tretkurbel einschraubbar ist. Zwischen dem Gewinde und dem Pedalkörper ist ein Fixierelement vorgesehen. Für die Ausgestaltung des Lagerelements ist dieses Fixierelement zum Vorspannen des Lagerelements erforderlich. Hierbei wird eine handelsübliche Pedalachse von der Außenseite des Pedals eingeführt und über das Fixierelement gehalten. Es sind auch Pedalachsen bekannt, die in einer Hülse angeordnet sind. Hierbei ist im Bereich des Lagerelements eine Hülse vorgesehen, die die Pedalachse umgibt, wobei die Wälzlager zwischen der Hülse und der Pedalachse angeordnet sind. Mit Hilfe des Fixierelements wird das eine Hülse aufweisende Lagerelement zusammen mit der Pedalachse von der in Richtung der Tretkurbel weisenden Seite des Pedals in dieses eingeschoben, insbesondere eingeschraubt.

Erfindungsgemäß weist das Fahrradpedal an einer Pedalinnenseite, d.h. an derjenigen Seite, die in Richtung der Tretkurbel weist, ein Führungselement auf. Durch ein derartiges, insbesondere stegförmig ausgebildetes Führungselement ist eine seitliche Führung des auf der Aufstandfläche aufstehenden Fußes realisiert. Hierbei ist das Führungselement erfindungsgemäß derart ausgebildet bzw. angeordnet, dass es in Draufsicht das Fixierelement zumindest teilweise überdeckt. Hierdurch ist es möglich, den Schuh sehr weit nach innen in Richtung der Tretkurbel zu verrücken. Der Abstand des Fußes zu der Tretkurbel, der aufgrund des Fixierelements bei handelsüblichen Pedalachsen zwingend erforderlich ist, wird somit verringert. Dies hat zur Folge, dass der Fuß näher an der Tretkurbel angeordnet werden kann. Dies führt zu einer besseren Kraftübertragung sowie einer Verbesserung des Q-Faktors. Aufgrund des Vorsehens einer Innenführung besteht nicht mehr die Gefahr, dass der Fuß zu weit nach innen gesetzt wird und eine Kollision mit der Tretkurbel erfolgt. Durch das Vorsehen einer erfindungsgemäßen Innenführung ist die seitliche Lage des Fußes definiert. Insbesondere kann aufgrund der erfindungsgemäßen Ausgestaltung des Führungselements der Fuß nahe der Tretkurbel angeordnet werden, da das Führungselement das Fixierelement zumindest teilweise überdeckt. Der Benutzer kann die Füße somit nach innen verschieben, bis der Schuh an dem Führungselement anliegt. Hierbei ist das Führungselement in besonders bevorzugter Ausführungsform derart ausgestaltet, dass zwischen der in Richtung der Tretkurbel weisenden Außenseite des Führungselements und der Tretkurbel ein sehr geringer Abstand von vorzugsweise nur 1 bis 2 mm besteht.

In einer erfindungsgemäßen Weiterbildung ist eine durch das Führungselement gebildete Anlagefläche, an der der Schuh anliegt, d.h. die in Richtung der Aufstandfläche weist, zumindest teilwiese konkav ausgebildet. Insbesondere ist das Führungselement in dem vorderen, d.h. dem in Fahrtrichtung weisende Bereich vorzugsweise konkav ausgebildet bzw. in Richtung der Aufstandfläche gekrümmt. Aufgrund dieser konkaven Ausbildung der Anlagefläche ist die Lage des Fußes auch in Pedallängsrichtung bzw. in Fahrtrichtung besser definiert. Durch die Krümmung ist es möglich den Schuh nach vorne in Fahrtrichtung zu schieben, während er innen in Richtung der Tretkurbel verschoben wird. Die Innenseite des Schuhs im Bereich des großen Zehs liegt sodann in dem gekrümmten Bereich an. Durch ein derart ausgestaltetes Führungselement ist es erfindungsgemäß möglich, den Fuß auf dem Fahrradpedal in einer definierten Lage anzuordnen, ohne das ein festes Verbindern des Schuhs mit dem Fahrradpedal, beispielsweise über ein Klick-System, erforderlich ist.

Anstatt oder zusätzlich zu einer Krümmung der Anlagefläche im Bereich einer Pedalvorderseite, ist es auch möglich, in diesem Bereich ein gesondertes Rückhalteelement vorzusehen, so dass einerseits ein Führungselement vorgesehen ist, um eine Innerführung zu realisieren und/ oder andererseits ein Rückhalteelement vorgesehen ist, um die Lage des Fußes in Pedallängsrichtung zu definieren. In der zuvor genannten Ausführungsform ist das Rückhalteelement vorzugsweise einstückig mit dem Führungselement ausgebildet bzw. das Führungselement weist einen als Rückhalteelements dienenden Bereich auf. Erfindungsgemäß ist somit beispielsweise bei Stadträdern, die üblich nur mit Straßenschuhe genutzt werden, eine ergonomisch gute Stellung des Fußes realisiert.

Das Vorsehen eines Rückhalteelements in dem vorderen Bereich einer Pedal-Aufstandfläche stellt eine selbständige Erfindung dar, die unabhängig vom Vorsehen eines Führungselements an der Pedalinnenseite ist. In bevorzugter Ausführungsform sind diese beiden Erfindungen jedoch miteinander kombiniert, wobei es besonders bevorzugt ist, dass das Führungselement zusammen mit dem Rückhalteelement einstückig ausgebildet ist.

Bei einer bevorzugten Ausführungsform der Erfindung ist das Führungselement in Seitenansicht des Pedals nicht symmetrisch ausgebildet. Vielmehr erstreckt sich das Führungselement von einer Pedalvorderseite über das Fixierelement in einem Bereich zwischen der Pedalachse und einer Pedalrückseite. Insbesondere ist das Führungselement zwischen der Pedalachse und der Pedalrückseite mit dem Pedalkörper verbunden und reicht somit nicht bis zur Pedalrückseite. Vorzugsweise ist das Führungselement mit dem hinteren Bereich des Pedalkörpers in einem Abstand von 10 mm bis 15 mm zur Pedalachse mit dem Pedalkörper verbunden.

Es ist jedoch bevorzugt, dass das Pedal auf beiden Seite eine Aufstandfläche aufweist und entsprechend auch zwei Führungselemente und/ oder Rückhalteelemente vorgesehen sind. Das Pedal weist somit keine Oberseite und Unterseite auf, da beide Seiten gleich ausgebildet sind, so dass vom Benutzer nicht darauf geachtet werden muss, auf welcher Seite des Pedals der Fuß aufgesetzt wird. Bei dieser bevorzugten Ausführungsform ist das Pedal in Seitenansicht punktsymmetrisch zur Drehachse bzw. Pedalachse.

Bei einer weiteren bevorzugten Ausführungsform ist das Führungselement auf der in Pedallängsrichtung bzw. Fahrtrichtung hinter der Pedalachse liegenden Bereich zunächst derart angeordnet, dass es sich ausgehend von dem Pedalkörper im Wesentlichen waagrecht bzw. zur Seite in Richtung der Tretkurbel versteckt. Eine Oberseite des Führungselements steht in diesem Bereich nicht gegenüber der Aufstandfläche nach oben vor. Das Führungselement ist in seinem weiteren Verlauf nach oben gezogen und umgibt in einer bevorzugten Ausführungsform das Fixierelement teilweise, insbesondere in einem Bereich eines Viertelkreises. Durch das waagrechte Anordnen des Führungselements ist sichergestellt, dass der Schuh vollständig nach innen verschoben und somit sehr nahe an die Tretkurbel herangeführt werden kann.

Vorzugsweise weist das Führungselement im Bereich der Pedalachse eine Höhe von 10 mm bis 15 mm gegenüber der Pedalachse auf. Bezogen auf die Aufstandfläche weist das Führungselement im Bereich der Pedalachse vorzugweise eine Höhe von mindestens 3 mm auf.

Das in Seitenansicht vorzugsweise bogenförmig ausgebildete Führungselement weist eine seitliche Öffnung im Bereich des Fixierelements auf. Hierdurch ist gewährleistet, dass das Fixierelement weiterhin gut zugänglich ist. Es wäre ggf. möglich Pedalachsen zu entwickeln, bei denen ein zugängliches Fixierelement nicht erforderlich ist. Dies hätte jedoch den erheblichen Nachteil, dass hierdurch die Kosten stark erhöht würden. Es ist daher bevorzugt eine auf dem Markt erhältliche Standard-Pedalachse zu verwenden. Bei einer Verwendung von neu entwickelten Pedalachsen, bei denen ein derartiges vorstehendes Fixierelement nicht erforderlich ist, könnte das Führungselement derart ausgebildet sein, dass es in Draufsicht nicht seitlich neben der Aufstandfläche oder nur geringfügig neben der Aufstandfläche angeordnet sein muss. Dies wäre in dieser Ausführungsform nicht erforderlich, da das Pedal kein seitliches Fixierelement für die Pedalachse aufweist und daher nahe der Tretkurbel montiert werden kann. Dennoch ist auch bei dieser Ausführungsform vorzugsweise ein Rückhalteelement vorgesehen, das in besonders bevorzugter Weiterbildung zusammen mit einem Führungselement einstückig ausgebildet ist. Das Führungselement weist hierbei lediglich den Unterschied auf, dass es nicht seitlich vorsteht wie anhand der ersten bevorzugten Ausführungsform der Erfindung beschrieben. Insbesondere die konkave Krümmung des Führungs- und/ oder Rückhalteelements ist vorzugsweise weiterhin gegeben.

Vorzugsweise ist das erfindungsgemäße Führungselement auf beiden Seiten des Pedals, d.h. auf der Ober- und Unterseite angeordnet, sofern es sich um ein Pedal mit zwei aneinander gegenüberliegenden Aufstandflächen handelt. Hierbei ist das Führungselement in bevorzugter Ausführungsform in Seitenansicht zur Pedalachse im Wesentlichen punksymmetrisch angeordnet.

Bei einer besonders bevorzugten Weiterbildung der Erfindung, die eine selbständige Erfindung darstellt, ist die eine oder ggf. beide Aufstandflächen in Längsrichtung konkav ausgebildet. Dies führt dazu, dass der Fuß in Richtung der Pedalachse rutscht und hierdurch eine weitere Lagedefinitionen erzielt wird, wobei es besonders bevorzugt ist, dass die konkave Ausgestaltung der Aufstandfläche in Verbindung mit dem vorstehend beschriebenen Fixierelement vorgesehen ist.

Eine Weiterbildung der Erfindung besteht darin, dass der Pedalkörper im Querschnitt keilförmig ausgebildet ist, wobei sich der Keil nach außen, d.h. von der Tretkurbel weg, verjüngt. Durch einen derartigen Varus-Keil kann eine Verbesserung der Fußstellung erzielt werden. Insbesondere die Kombination einer gekrümmten Aufstandfläche mit einem keilförmigen Querschnitt stellt eine selbständige Erfindung da. Hierdurch kann auch ohne Vorsehen des vorstehend beschriebenen Führungselements eine Verbesserung der Fußstellung erzielt werden. Bevorzugt ist jedoch auch hier wieder eine Kombination mit dem vorstehend beschriebenen Führungselement.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht einer erfindungsgemäßen Ausführungsform eines Fahrradpedals,
- Fig. 2: einer schematischen Seitenansicht des Fahrradpedals in Richtung des Pfeils II in Fig. 1 und
- Fig. 3: einen schematischer Teilschnitt entlang der Linie III - III in Fig. 1.

Das erfindungsgemäße Fahrradpedal weist einen Pedalkörper 10 auf. Hierbei handel es sich um einen einteiligen oder mehrteiligen Pedalkörper, der beispielsweise aus Kunststoff hergestellt ist. Der Pedalkörper 10 kann, insbesondere wenn es sich um einen mehrteiligen Pedalkörper handelt, einen Käfig oder Raum aufweisen, der die einzelnen Teile des Pedalkörpers umgibt. Der Pedalkörper 10 weist im dargestellten Ausführungsbespiel zwei Aufstandflächen 12 auf, die einander gegenüberliegend angeordnet sind. Die Aufstandflächen dienen zur Auflage des Fußes bzw. der Schuhsohle.

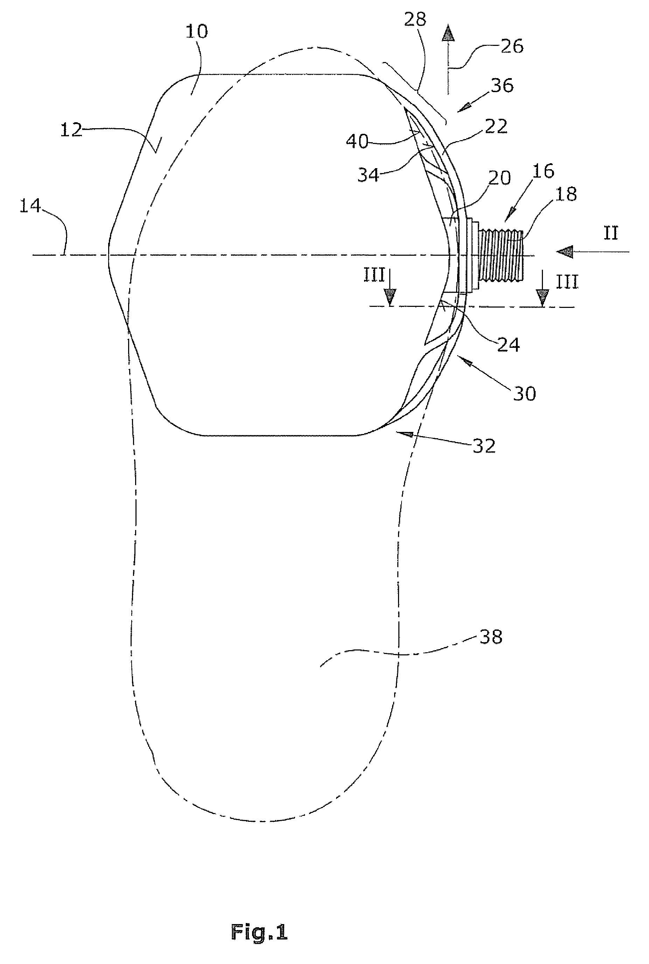

Das Fahrradpedal ist um eine Querachse 14 drehbar. Hierzu ist in einer Öffnung des Pedalkörpers 10 eine Pedalachse 16 angeordnet. Die Pedalachse 16 weist an ihrem freien Ende ein Gewinde 18 auf. Mit Hilfe des Gewindes 18 kann das Pedal in eine an einer Tretkurbel vorgesehene Gewindebohrung eingeschraubt werden. Die Pedalachse 16 erstreckt sich in den Pedalkörper 10. Um ein Drehen des Pedalkörpers 10 um die Pedalachse 16 zu ermöglichen, ist ein Lagerelement vorgesehen, das üblicherweise zwei innerhalb des Pedalkörpers angeordnete Kugellager aufweist. Bei handelsüblichen Pedalachsen werden die Kugellager über ein Fixierelement 20 fixiert sowie ggf. vorgespannt. Im Wesentlichen werden zwei unterschiedlich ausgestaltete Pedalachsentypen verwendet. Bei dem ersten Typ wird die Pedalachse 16 von außen, d.h. in Fig. 1 von der linken Seiten fixiert. Hierzu wird von der linken Seite ein die Pedalachse und die Lager haltender Bolzen eingeführt. Dieser ist mit dem Fixierelement 20 verbunden und justiert die Wälzlager des Lagerelements. Bei einer weiteren üblichen Bauform von Pedalachsen sind die beiden Wälzlager innerhalb einer Hülse angeordnet. Die Hülse ist von dem Fixierelement gehalten und wird in Fig. 1 von rechts in eine Sackbohrung des Pedalkörper 10 eingefügt.

Erfindungsgemäß ist der Pedalkörper 10 vorzugsweise einstückig mit einem Führungselement 22 verbunden. Das Führungselement 22 ist im dargestellten Ausführungsbeispiel als bogenförmiger Steg ausgebildet. Der bogenförmige Steg 22 ist an einer Pedalinnenseite 24, die in Richtung des Gewindes 18 weist angeordnet. Das Führungselement erstreckt sich nicht über die gesamte Länge des Pedalkörpers 10, sondern beginnt in Längsrichtung 26 bzw. in Fahrtrichtung 26 im Bereich einer Pedalvorderseite 28. Von hier aus erstreckt sich das Führungselement 22 in Richtung des Fixierelements 20, welches das Führungselement 22 in Draufsicht (Fig. 1) überdeckt. Das Führungselement ist sodann auf die Querachse 14 bzw. die Pedalachse 18 bezogenen im hinteren Bereich 30 des Pedalkörpers 10 mit diesem wiederum verbunden. Insbesondere erfolgt die Verbindung zwischen dem Führungselement 22 und dem Pedalkörper 10 in dessen hinterm Bereich etwa in der Mitte zwischen der Querachse 14 und einer Pedalrückseite 32.

Das Führungselement bildet an seiner Innenseite eine Anlagefläche 34 aus. Die Anlagefläche 34 ist in Richtung der Aufstandfläche 12 konkav ausgebildet. Ein in Fahrtrichtung vorderer Bereich des Führungselements 22 bildet ein Rückhalteelement 36. Das Rückhalteelement 36 ist nach innen, das heißt in Richtung der Aufstandfläche 12 bzw. in Fig. 1 nach links gekrümmt. Das Zurückhalteelement weist gegenüber der Pedallängsrichtung 26 einen Winkel ungleich 0°, insbesondere einen Winkel von 25° bis 60°, auf. Durch das Rückhalteelement 36 wird die Lage eines Schuhs auf der Aufstandfläche 12 insofern besser definiert, dass der Schuh 38 weniger leicht in Längsrichtung 26 rutscht. Hierdurch ist sichergestellt, dass die Kraft von dem Fuß über den Fußballen bzw. das Groß-Zehengelenk auf die Aufstandfläche 12 bzw. die Pedalachse 18 übertragen wird. Ein Verrutschen des Schuhs 38 in Längsrichtung 26 nach vorne ist insbesondere dann vermieden, wenn eine Innenseite 40 des Schuhs 38 an der Anlagefläche 34 des Führungselements 22 anliegt. Diese erfolgt dadurch, dass der Benutzer den Schuh 38 nach innen in Richtung des Gewindes 18 bzw. in Richtung der Tretkurbel verschieb.

Durch die erfindungsgemäße Ausgestaltung des Führungselements 22, insbesondere in Verbindung mit dem integrierten Rückhalteelement 36, kann der Schuh 38 auf einfache Weise wie in Fig. 1 skizziert, auf dem Pedal angeordnet werden. Der Benutzer kann jederzeit durch einfaches Ziehen des Schuhs 38 nach innen die Lage und somit die Kraftübertragung verbessern. Ferner ist hierdurch eine ergonomische Schuh-, Fuß- und Beinstellung gewährleistet.

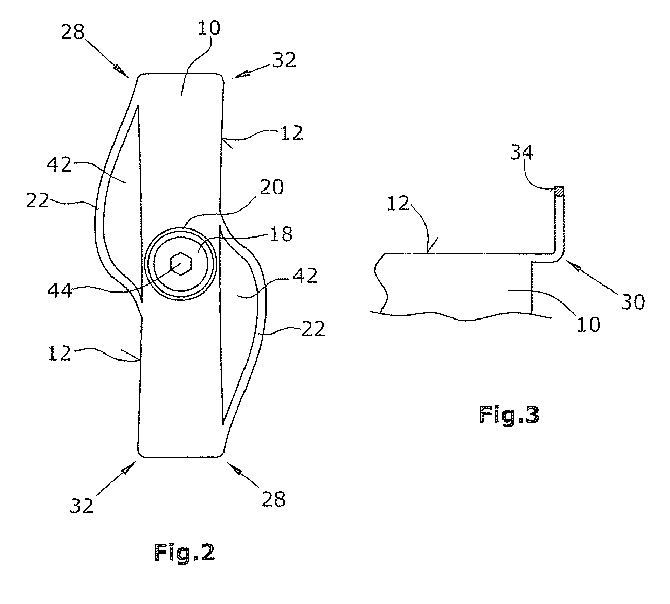

Eine möglichst gute Lage des Schuhs 38 kann ferner dadurch erzielt werden, dass die Aufstandflächen 12 (Fig. 2) leicht konkav ausgebildet sind. Zusätzlich kann die Ergonomie dadurch weiter verbessert werden, dass der Pedalkörper 10 keilförmig ausgebildet ist, wobei sich der Keil auf der freien, in Fig. 1 in Richtung der linken Seite verjüngt. Der Pedalkörper 10 ist somit nahe des Gewindes 18 dicker als an dem in Fig. 1 linken äußeren Ende.

In Seitenansicht (Fig. 2) weist das Führungselement eine Öffnung 42 auf. Insbesondere ist die Öffnung 42 im Bereich des Fixierelements 20 vorgesehen, so dass das Fixierelement 20 weiterhin von außen gut zugänglich bleibt. Dies ist zur Fixierung der Pedalachse 18 bzw. der Lagerelemente innerhalb des Pedalkörpers 10 erforderlich.

Wie ferner aus der Seitenansicht (Fig. 2) ersichtlich ist, ist das Pedal zu der Querachse 14, die in Fig. 2 senkrecht zur Zeichenebene ist, punktsymmetrisch ausgebildet. Mit anderen Worten: In der Seitenansicht ist das Pedal zu einer Inbusöffnung 44 die in der Achse 16 vorgesehen ist punktsymmetrisch angeordnet. Die Inbusöffnung dient zum Lösen oder Einschrauben der Pedalachse 18 in die Gewindeöffnung der Tretkurbel.

Das Führungselement erstreckt sich ausgehend von dem Pedalkörper 10 (Fig. 3) in Draufsicht zunächst waagrecht bzw. im Wesentlichen in der Ebene der Aufstandfläche 12. Hierbei erstreckt sich dieser Bereich soweit nach außen bzw. waagrecht, dass die Außenkante 40 des Schuhs 38 oberhalb dieses Teilstücks des Führungselements angeordnet werden kann. Hierdurch ist sichergestellt, dass die Verschiebung des Schuhs 38 nach innen in Richtung des Gewindes 18 nicht zu früh begrenzt ist, sondern tatsächlich erst im Wesentlichen durch den Teil des Führungselements 22 begrenzt wird, der auf Höhe des Fixierelements 20 angeordnet ist.

Bei der vorstehend beschriebenen Ausführungsform handelt es sich um eine besonders bevorzugte Ausführungsform der Erfindung, bei der sowohl ein Führungselement 22 als auch ein Rückhalteelement 36 vorgesehen sind. Erfindungsgemäß ist es jedoch auch möglich, Pedale derart auszugestalten, dass entweder ein Führungselement 22 oder ein Rückhalteelement 36 vorgesehen ist. In besonders bevorzugter Ausführungsform sind jedoch beide Elemente 22, 36 vorgesehen und insbesondere einstückig ausgebildet wie vorstehend erläutert.

## Patentansprüche

1. Fahrradpedal, mit
einem eine Aufstandfläche (12) aufweisenden Pedalkörper (10),
einer den Pedalkörper (10) drehbar haltenden Pedalachse (18),
einem zwischen der Pedalachse (18) und dem Pedalkörper (10) angeordneten Lagerelement, und
einem die Pedalachse (18) insbesondere vollständig umgebenden Fixierelement (20) zum Fixieren des Lagerelements in dem Pedalkörper (10),
**dadurch gekennzeichnet, dass**
ein an einer Pedalinnenseite angeordnetes Führungselement (22) zum seitlichen Führen eines auf der Aufstandfläche (12) aufstehenden Fußes (38), wobei das Führungselement (22) das Fixierelement (20) in Draufsicht zumindest teilweise überdeckt und
sich von der Pedalvorderseite (28) über das Fixierelement (20) bis in einen Bereich zwischen der Pedalachse (18) und einer Pedalrückseite (32) erstreckt.

2. Fahrradpedal nach Anspruch 1, **dadurch gekennzeichnet, dass** das Führungselement (22) im Bereich einer Pedalvorderseite (28) ein Rückhalteelement (36) zur Lagedefinition des Fußes in Längsrichtung (26) aufweist.

3. Fahrradpedal nach Anspruch 1, **dadurch gekennzeichnet, dass** ein in einem vorderen Bereich (28) einer Pedal-Aufstandfläche (12) vorgesehenen Rückhalteelement (36) zur Lagedefinition des Fußes in Längsrichtung (26).

4. Fahrradpedal nach Anspruch 3, **dadurch gekennzeichnet, dass** das Führungselement (22) in das Rückhalteelement (36) übergeht.

5. Fahrradpedal nach einem der Ansprüche 1 bis 4, **dadurch gekennzeichnet, dass** das Führungselement (22) und/ oder das Rückhalteelement (36) eine in Richtung der Aufstandfläche (12) weisende Anlagefläche (34) aufweist, die zumindest teilweise konkav ausgebildet ist.

6. Fahrradpedal nach Anspruch 5 **dadurch gekennzeichnet, dass** das Rückhalteelement (36) eine Rückhaltefläche aufweist, die insbesondere stufenlos in die Anlagefläche (34) übergeht.

7. Fahrradpedal nach Anspruch 5 oder 6 **dadurch gekennzeichnet, dass** das Rückhaltelement (36) insbesondere die Rückhaltefläche zur Pedallängsrichtung (26) einen Winkel von ungleich 0° aufweist und vorzugsweise die Rückhaltefläche in Richtung des Pedalkörpers (10) weist.

8. Fahrradpedal nach einem der Ansprüche 1 bis 7, **dadurch gekennzeichnet, dass** das Führungselement (22) in Seitenansicht bogenförmig ausgebildet ist.

9. Fahrradpedal nach einem der Ansprüche 1 bis 8, **dadurch gekennzeichnet, dass** das Führungselement (22) eine seitlich angeordnete Öffnung (42) im Bereich des Fixierelements (20) aufweist.

10. Fahrradpedal nach einem der Ansprüche 1 bis 9, **dadurch gekennzeichnet, dass** die Aufstandfläche (12) konkav ausgebildet ist.

11. Fahrradpedal nach einem der Ansprüche 1 bis 10, **dadurch gekennzeichnet, dass** der Pedalkörper (10) und das Führungselement (22), sowie insbesondere das Rückhalteelement (36), einstückig vorzugsweise aus Kunststoff, hergestellt sind.
